# EUROPÄISCHE PATENTANMELDUNG

(11) **EP 1 939 494 A2**
(43) Veröffentlichungstag der Anmeldung: **02.07.2008**
(21) Anmeldenummer: 07023370.5
(22) Anmeldetag: 03.12.2007
(51) Int. Cl.: F16H 55/36

(54) **Triebrad**

(30) Priorität: 27.12.2006 DE 102006061544
(71) Anmelder: LuK Lamellen und Kupplungsbau Beteiligungs KG, 77815 Bühl (DE)
(72) Erfinder: Lehmann, Steffen, 76275 Ettlingen (DE); Fechler, Christian, 76199 Karlsruhe (DE); Sieber, Dimitri, 76275 Ettlingen (DE)

(57) **Zusammenfassung**

Die Erfindung betrifft ein Triebrad mit einer Triebscheibe, insbesondere einer Riemenscheibe (12), und mit einer Drehschwingungsdämpfungseinrichtung (30), die zwei Teile (21,31), nämlich ein Eingangsteil (31) und ein Ausgangsteil (21), umfasst, die entgegen der Drehschwingungsdämpfungswirkung von mindestens einem Drehschwingungsdämpfungselement (25), insbesondere von mehreren Drehschwingungsdämpfungselementen, relativ zueinander um einen Schwingwinkel (∆) in entgegengesetzten Drehrichtungen verdrehbar sind.

Die Erfindung zeichnet sich durch eine Reibsteuereinrichtung aus, die bei relativ kleinen Schwingwinkeln eine geringe Reibungsdämpfung und bei relativ großen Schwingwinkeln eine hohe Reibungsdämpfung zwischen den beiden Teilen erzeugt.

## Beschreibung

Die Erfindung betrifft ein Triebrad mit einer Triebscheibe, insbesondere einer Riemenscheibe, und mit einer Drehschwingungsdämpfungseinrichtung, die zwei Teile, nämlich ein Eingangsteil und ein Ausgangsteil, umfasst, die entgegen der Drehschwingungsdämpfungswirkung von mindestens einem Drehschwingungsdämpfungselement, insbesondere von mehreren Drehschwingungsdämpfungselementen, relativ zueinander um einen Schwingwinkel in entgegengesetzten Drehrichtungen verdrehbar sind.

Aufgabe der Erfindung ist es, ein Triebrad gemäß dem Oberbegriff des Anspruchs 1 zu schaffen, das einfach aufgebaut und kostengünstig herstellbar ist. Insbesondere soll das Start-/Stoppverhalten eines mit dem Triebrad ausgestatteten Antriebs verbessert werden.

Die Aufgabe ist bei einem Triebrad mit einer Triebscheibe, insbesondere einer Riemenscheibe, und mit einer Drehschwingungsdämpfungseinrichtung, die zwei Teile, nämlich ein Eingangsteil und ein Ausgangsteil, umfasst, die entgegen der Drehschwingungsdämpfungswirkung von mindestens einem Drehschwingungsdämpfungselement, insbesondere von mehreren Drehschwingungsdämpfungselementen, relativ zueinander um einen Schwingwinkel in entgegengesetzten Drehrichtungen verdrehbar sind, durch eine Reibsteuereinrichtung gelöst, die bei relativ kleinen Schwingwinkeln eine geringe Reibungsdämpfung und bei relativ großen Schwingwinkeln eine hohe Reibungsdämpfung zwischen den beiden Teilen erzeugt. Die Reibsteuereinrichtung kann auch als verschleppte Reibsteuereinrichtung bezeichnet werden. Das erfindungsgemäße Triebrad ermöglicht im Zuglastfall bei relativ kleinen Schwingwinkeln durch die geringe Reibungsdämpfung eine gute Schwingungsisolation. Darüber hinaus stellt das erfindungsgemäße Triebrad bei relativ großen Schwingwinkeln, wie sie im Start-/Stoppverhalten eines mit dem Triebrad ausgestatteten Antriebs auftreten, eine so hohe Reibungsdämpfung sicher, dass unerwünschte Kennlinienanschläge in Verbindung mit Resonanzdurchgängen sicher vermieden werden.

Ein bevorzugtes Ausführungsbeispiel des Triebrads ist dadurch gekennzeichnet, dass die Reibsteuereinrichtung einen Reibring umfasst, der durch eine Tellerfeder beaufschlagt ist. Der Reibring ist vorzugsweise zwischen einem Stützelement und der Tellerfeder eingeklemmt. Das Stützelement wiederum ist drehfest mit einem Mitnehmerelement verbunden. Der Reibring kann an dem Stützelement oder an der Tellerfeder befestigt sein.

Ein weiteres bevorzugtes Ausführungsbeispiel des Triebrads ist dadurch gekennzeichnet, dass die Tellerfeder so mit einem Mitnehmerelement gekoppelt ist, dass die Tellerfeder erst nach einer Relativverdrehung um einen Tellerfederfreiwinkel drehfest mit dem Mitnehmerelement verbunden wird. Innerhalb des Tellerfederfreiwinkels kann sich das Mitnehmerelement ohne nennenswerte Reibungsdämpfung relativ zu der Tellerfeder verdrehen. Nach Überwinden des Tellerfederfreiwinkels dreht sich die Tellerfeder mit dem Mitnehmerelement und bewirkt durch die Beaufschlagung des Reibrings eine hohe Reibungsdämpfung.

Ein weiteres bevorzugtes Ausführungsbeispiel des Triebrads ist dadurch gekennzeichnet, dass die Tellerfeder durch eine mit Spiel versehene formschlüssige Verbindung drehfest mit dem Mitnehmerelement verbindbar ist. Durch das Spiel wird eine Verschleppung des Reibeingriffs des durch die Tellerfeder beaufschlagten Reibrings bewirkt.

Ein weiteres bevorzugtes Ausführungsbeispiel des Triebrads ist dadurch gekennzeichnet, dass das Mitnehmerelement eine Mitnehmerverzahnung aufweist, in die eine Tellerfederverzahnung der Tellerfeder eingreift. Bei dem Mitnehmerelement handelt es sich vorzugsweise um ein Blechformteil.

Ein weiteres bevorzugtes Ausführungsbeispiel des Triebrads ist dadurch gekennzeichnet, dass die Tellerfeder radial außen einen Tellerfederverzahnungsbereich aufweist. Bei der Tellerfeder handelt es sich vorzugsweise um ein Blechformteil.

Ein weiteres bevorzugtes Ausführungsbeispiel des Triebrads ist dadurch gekennzeichnet, dass das Mitnehmerelement so mit einem weiteren Mitnehmerelement gekoppelt ist, dass das weitere Mitnehmerelement erst nach einer Relativverdrehung um einen Dämpfungswinkel, der vorzugsweise größer als der Tellerfederfreiwinkel ist, drehfest mit dem Mitnehmerelement verbunden wird. Innerhalb des Dämpfungswinkels kann sich das Mitnehmerelement relativ zu dem weiteren Mitnehmerelement entgegen der Drehschwingungsdämpfungswirkung der Drehschwingungsdämpfungselemente verdrehen. Nach Überwinden des Dämpfungswinkels dreht sich das Mitnehmerelement mit dem weiteren Mitnehmerelement.

Ein weiteres bevorzugtes Ausführungsbeispiel des Triebrads ist dadurch gekennzeichnet, dass das Mitnehmerelement durch eine mit Spiel versehene formschlüssige Verbindung drehfest mit dem weiteren Mitnehmerelement verbindbar ist. Durch das Spiel wird der Dämpfungswinkel definiert.

Ein weiteres bevorzugtes Ausführungsbeispiel des Triebrads ist dadurch gekennzeichnet, dass das Mitnehmerelement eine Mitnehmerverzahnung aufweist, in die eine weitere Mitnehmerverzahnung des weiteren Mitnehmerelements eingreift. Bei dem weiteren Mitnehmerelement handelt es sich vorzugsweise um ein Blechformteil.

Ein weiteres bevorzugtes Ausführungsbeispiel des Triebrads ist dadurch gekennzeichnet, dass das weitere Mitnehmerelement radial außen einen Mitnehmerverzahnungsbereich aufweist. Vorzugsweise ist das weitere Mitnehmerelement in axialer Richtung teilweise zwischen dem Mitnehmerelement und der Tellerfeder angeordnet. Dadurch wird der Bauraum reduziert.

Ein weiteres bevorzugtes Ausführungsbeispiel des Triebrads ist dadurch gekennzeichnet, dass das Mitnehmerelement radial außen einen sich in axialer Richtung erstreckenden Mitnehmerverzahnungsbereich aufweist, in den der Mitnehmerverzahnungsbereich des weiteren Mitnehmerelements und/oder der Tellerfederverzahnungsbereich der Tellerfeder eingreifen/eingreift. Vorzugsweise befinden sich sowohl der Mitnehmerverzahnungsbereich des weiteren Mitnehmerelements als auch der Tellerfederverzahnungsbereich der Tellerfeder in Eingriff mit dem Mitnehmerverzahnungsbereich des Mitnehmerelements. Durch die unterschiedlich großen Spiele wird die gewünschte Funktion des Triebrads ermöglicht.

Ein weiteres bevorzugtes Ausführungsbeispiel des Triebrads ist dadurch gekennzeichnet, dass die Mitnehmerelemente, vorzugsweise unter Zwischenschaltung von Käfigelementen, durch das Drehschwingungsdämpfungselement beziehungsweise die Drehschwingungsdämpfungselemente miteinander gekoppelt sind. Bei den Drehschwingungsdämpfungselementen handelt es sich vorzugsweise um Schraubenfedern, die auch als Bogenfedern bezeichnet werden. Die Käfigelemente sind vorzugsweise aus Kunststoff gebildet und in das jeweils zugehörige Mitnehmerelement eingehängt.

Ein weiteres bevorzugtes Ausführungsbeispiel des Triebrads ist dadurch gekennzeichnet, dass das Triebrad ein zusätzliches Mitnehmerelement umfasst, an dem ein Antriebswellenschwingungsdämpfer angebracht ist. Der Antriebswellenschwingungsdämpfer wird auch als Kurbelwellenschwingungsdämpfer bezeichnet und umfasst vorzugsweise eine Dämpfermasse, die mit Hilfe einer Gummifeder an dem zusätzlichen Mitnehmerelement angebracht ist.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
- Figur 1: ein erfindungsgemäßes Triebrad im Halbschnitt;
- Figur 2: einen vergrößerten Ausschnitt aus Figur 1 und
- Figur 3: ein kartesisches Koordinatendiagramm, in dem der Verlauf des Drehmoments über dem Verdrehwinkel dargestellt ist.

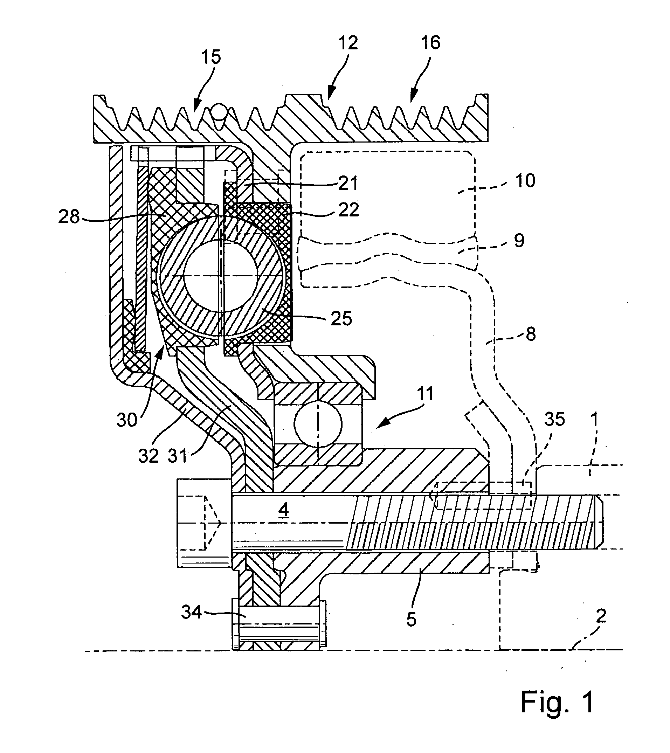

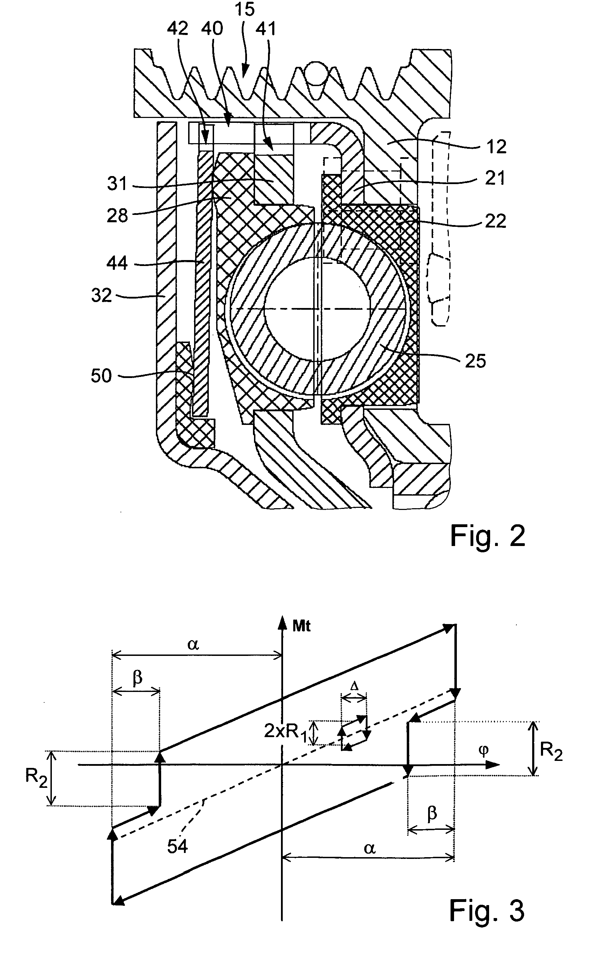

In den Figuren 1 und 2 ist ein Triebrad gemäß einem Ausführungsbeispiel der Erfindung mit einer integrierten Drehschwingungsdämpfungseinrichtung in verschiedenen Ansichten dargestellt. Das Triebrad dient zum Antreiben eines (nicht dargestellten) Nebenaggregats eines Kraftfahrzeugs. Zu diesem Zweck wird das Triebrad drehfest an einer Antriebswelle 1, insbesondere einer Kurbelwelle einer Brennkraftmaschine, montiert. Die Antriebswelle 1 und das Triebrad drehen sich im Betrieb um eine Drehachse 2.

Das Triebrad umfasst eine mit Schrauben 4 drehfest mit der Antriebswelle 1 verbundene Nabe 5. In axialer Richtung, das heißt in Richtung der Drehachse 2, ist zwischen der Nabe 5 und der Antriebswelle 1 ein Trägerblech 8 mit der Antriebswelle 1 drehfest verbunden. Das Trägerblech 8 stellt ein zusätzliches Mitnehmerelement dar und wird auch als solches bezeichnet. Radial außen ist an dem Trägerblech 8 eine Schwungmasse 10 unter Zwischenschaltung einer Gummifeder 9 angebracht. Die an der Gummifeder 9 angebrachte Schwungmasse 10 wird auch als Dämpfermasse bezeichnet. Das Trägerblech 8, die Gummifeder 9 und die Dämpfermasse 10 stellen einen in das Triebrad integrierten Kurbelwellenschwingungsdämpfer dar.

Auf der Nabe 5 ist mit Hilfe einer Lagereinrichtung 11 eine Riemenscheibe 12 mit zwei Riemenscheibenspuren 15, 16 drehbar gelagert. Durch die beiden Riemenscheibenspuren 15, 16 wird auf einfache Art und Weise eine Bedämpfung von zwei Riementrieben ermöglicht. Der eine Riementrieb dient zum Beispiel zum Antreiben eines mechanischen Laders. Der andere Riementrieb dient zum Antreiben weiterer Nebenaggregate. Alternativ kann die Riemenscheibe 12 auch nur mit einer Riemenscheibenspur ausgestattet sein. In dem dargestellten Ausführungsbeispiel ist die Riemenscheibe 12 über ein Wälzlager 11 auf der Nabe 5 zentriert. Anstelle eines Wälzlagers kann auch ein Gleitlager verwendet werden. Das Wälzlager liefert den Vorteil einer geringen Beeinflussung der Reibungsdämpfung durch die Riementrumkräfte.

Ein Mitnehmerelement 21 umfasst eine Mitnehmerscheibe, die zum Beispiel durch Nietverbindungselemente an der Riemenscheibe 12 befestigt ist. Das Mitnehmerelement 21 stellt das Ausgangsteil einer in das Triebrad integrierten Drehschwingungsdämpfungseinrichtung 30 dar. Die Drehschwingungsdämpfungseinrichtung 30 umfasst einen vorzugsweise aus Kunststoff gebildeten Käfig 22, der in das Mitnehmerelement 21 eingehängt, also drehfest mit diesem verbunden, ist. Der Käfig 22 umfasst mehrere Aufnahmekanäle für Drehschwingungsdämpfungselemente 25, von denen im Schnitt nur eines sichtbar ist. Bei dem Drehschwingungsdämpfungselement 25 handelt es sich um eine Bogenfeder. Daher werden die Aufnahmekanäle in dem Käfig 22 auch als Bogenfederkanäle bezeichnet. Der Bogenfederkanal in dem Käfig 22 dient zur Aufnahme einer Hälfte der Bogenfeder 25. Die andere Hälfte der Bogenfeder 25 ist in einem Bogenfederkanal aufgenommen, der in einem Käfig 28 ausgebildet ist. Der Käfig 28 ist in ein weiteres Mitnehmerelement 31 eingelegt oder eingehängt. Das weitere Mitnehmerelement 31 stellt das Eingangsteil der Drehschwingungsdämpfungseinrichtung 30 dar.

Das weitere Mitnehmerelement 31 ist zusammen mit einem Stützelement 32 mit Hilfe von Nietverbindungselementen 34 an der Nabe 5 befestigt. Die Nabe wiederum ist mit Hilfe der Schrauben 4 und einem gestrichelt angedeuteten Wellen-Naben-Verbindungselement 35 fest mit der Antriebswelle 1 verbunden. Die Nabe 5 leitet das im Betrieb auftretende Drehmoment von der Antriebswelle 1, insbesondere der Kurbelwelle, auf das weitere Mitnehmerelement 31 weiter, das auch als Flansch oder Eingangsteil bezeichnet wird. Der in den Flansch 31 eingesteckte Dämpferkäfig 28 überträgt das Drehmoment auf die Bogenfedern 25. Die Bogenfedern 25 laufen trocken in den Käfigen 22 und 28. Über den Dämpferkäfig 22 wird das Drehmoment von den Bogenfedern oder Drehschwingungsdämpfungselementen 25 in das Mitnehmerelement 21 eingeleitet, das an der Riemenscheibe 12 befestigt ist.

In Figur 2 sieht man, dass radial außen an dem weiteren Mitnehmerelement 31 ein Mitnehmerverzahnungsbereich 41 mit einer Außenverzahnung ausgebildet ist. Die Außenverzahnung des weiteren Mitnehmerelements 31 greift in einen axialen Mitnehmerverzahnungsbereich 40 ein, der sich radial außen in axialer Richtung von dem Mitnehmerelement 21 erstreckt. Der axiale Mitnehmerverzahnungsbereich 40 des Mitnehmerelements 21 ist komplementär zu der Außenverzahnung des radialen Mitnehmerverzahnungsbereichs 41 des weiteren Mitnehmerelements 31 ausgebildet. Dabei ist zwischen den beiden Verzahnungen ein in Umfangsrichtung wirksames Spiel vorgesehen, das eine Verdrehung des Mitnehmerelements 21 relativ zu dem Mitnehmerelement 31 um einen Dämpfungswinkel α zulässt, der auch als Dämpfergesamtverdrehwinkel bezeichnet wird. Das Spiel der beiden in Eingriff befindlichen Verzahnungen ist symmetrisch ausgeführt, so dass ein Verdrehen in beiden Drehrichtungen um +/- α möglich ist.

Darüber hinaus befindet sich ein radialer Tellerfederverzahnungsbereich 42, der radial außen an einer Tellerfeder 44 ausgebildet ist, mit dem axialen Mitnehmerverzahnungsbereich 40 des Mitnehmerelements 21 in Eingriff. Der radiale Tellerfederverzahnungsbereich 42 umfasst eine Außenverzahnung, die sich mit einer komplementär ausgebildeten Verzahnung des axialen Mitnehmerverzahnungsbereichs 40 in Eingriff befindet. Dabei ist zwischen dem axialen Mitnehmerverzahnungsbereich 40 und dem radialen Tellerfederverzahnungsbereich 42 in Umfangsrichtung ein solches Spiel vorgesehen, dass sich die Tellerfeder 44 um einen Tellerfederfreiwinkel β relativ zu dem Mitnehmerelement 21 verdrehen kann, bevor ein drehfeste Verbindung zwischen der Tellerfeder 44 und dem Mitnehmerelement 21 wirksam wird.

An dem Dämpferkäfig 28 liegt radial außen die Tellerfeder 44 an, die sich radial innen an einem Reibring 50 abstützt. Die Tellerfeder 44 ist in axialer Richtung so zwischen dem Dämpferkäfig 28 und dem Reibring 50 vorgespannt, dass der Reibring 50 gegen das Stützblech 32 gedrückt wird, das auch als Stützelement bezeichnet wird.

In Figur 3 ist in einem kartesischen Koordinatendiagramm das übertragene Drehmoment Mt über dem Verdrehwinkel ϕ in Form einer Torsionsdämpferkennlinie einschließlich Hysterese dargestellt. Durch eine durch den Koordinatenursprung verlaufende gestrichelte Linie 54 ist der Verlauf der Drehmomentkurve ohne Reibsprünge angedeutet. Bei Schwingwinkeln Δ, die kleiner als der Tellerfederfreiwinkel β sind, wirkt nur die Grundreibung. Die zugehörige Reibungsdämpfung ist mit R1 bezeichnet. Treten Schwingwinkel Δ auf, die größer als β sind, wird die Tellerfeder (44 in Figur 2) mitgenommen, und es tritt eine hohe Reibungsdämpfung auf. Der zugehörige Reibsprung ist R2 bezeichnet. Die hohe Reibungsdämpfung wird durch das Wirken der Tellerfederaxialkraft auf ihre Axialflächen hervorgerufen. Durch das erfindungsgemäße Riemenscheibendämpferkonzept wird bei kleinen Schwingwinkeln Δ eine geringe Reibungsdämpfung ermöglicht, wodurch eine gute Isolation sichergestellt ist. Bei Resonanzdurchgängen, wie sie beim Start/Stopp auftreten, und damit großen Schwingwinkeln Δ stellt sich eine hohe Reibungsdämpfung ein. Das wird gemäß einem wesentlichen Aspekt der vorliegenden Erfindung durch die Tellerfeder 44 mit der Spiel behafteten Verzahnung erreicht.

### Bezugszeichenliste

- 1.: Antriebswelle
- 2.: Drehachse
- 4.: Schrauben
- 5.: Nabe
- 8.: Trägerblech
- 9.: Gummifeder
- 10.: Schwungmasse
- 11.: Lagereinrichtung
- 12.: Riemenscheibe
- 15.: Riemenscheibenspur
- 16.: Riemenscheibenspur
- 21.: Mitnehmerelement
- 22.: Käfig
- 25.: Drehschwingungsdämpfungselemente
- 28.: Käfig
- 30.: Drehschwingungsdämpfungseinrichtung
- 31.: Mitnehmerelement
- 32.: Stützelement
- 34.: Nietverbindungselemente
- 35.: Wellen-Naben-Verbindungselement
- 40.: axialer Mitnehmerverzahnungsbereich
- 41.: radialer Mitnehmerverzahnungsbereich
- 42.: radialer Tellerfederverzahnungsbereich
- 44.: Tellerfeder
- 50.: Reibring
- 54.: Linie

## Patentansprüche

1. Triebrad mit einer Triebscheibe, insbesondere einer Riemenscheibe (12), und mit einer Drehschwingungsdämpfungseinrichtung (30), die zwei Teile (21,31), nämlich ein Eingangsteil (31) und ein Ausgangsteil (21), umfasst, die entgegen der Drehschwingungsdämpfungswirkung von mindestens einem Drehschwingungsdämpfungselement (25), insbesondere von mehreren Drehschwingungsdämpfungselementen, relativ zueinander um einen Schwingwinkel (Δ) in entgegengesetzten Drehrichtungen verdrehbar sind, **gekennzeichnet durch** eine Reibsteuereinrichtung, die bei relativ kleinen Schwingwinkeln (Δ) ein geringe Reibungsdämpfung und bei relativ großen Schwingwinkeln (Δ) eine hohe Reibungsdämpfung zwischen den beiden Teilen (21,31) erzeugt.

2. Triebrad nach Anspruch 1, **dadurch gekennzeichnet, dass** die Reibsteuereinrichtung einen Reibring (50) umfasst, der durch eine Tellerfeder (44) beaufschlagt ist.

3. Triebrad nach Anspruch 2, **dadurch gekennzeichnet, dass** die Tellerfeder (44) so mit einem Mitnehmerelement (21) gekoppelt ist, dass die Tellerfeder (44) erst nach einer Relativverdrehung um einen Tellerfederfreiwinkel (β) drehfest mit dem Mitnehmerelement (21) verbunden wird.

4. Triebrad nach Anspruch 3, **dadurch gekennzeichnet, dass** die Tellerfeder (44) durch eine mit Spiel versehene formschlüssige Verbindung drehfest mit dem Mitnehmerelement (21) verbindbar ist.

5. Triebrad nach Anspruch 3 und 4, **dadurch gekennzeichnet, dass** das Mitnehmerelement (21) eine Mitnehmerverzahnung aufweist, in die eine Tellerfederverzahnung der Tellerfeder (44) eingreift.

6. Triebrad nach einem der Ansprüche 3 bis 5, **dadurch gekennzeichnet, dass** die Tellerfeder (44) radial außen einen Tellerfederverzahnungsbereich (42) aufweist.

7. Triebrad nach einem der Ansprüche 3 bis 6, **dadurch gekennzeichnet, dass** das Mitnehmerelement (21) so mit einem weiteren Mitnehmerelement (31) gekoppelt ist, dass das weitere Mitnehmerelement (31) erst nach einer Relativverdrehung um einen Dämpfungswinkel (α), der größer als der Tellerfederfreiwinkel (β) ist, drehfest mit dem Mitnehmerelement (21) verbunden wird.

8. Triebrad nach Anspruch 7, **dadurch gekennzeichnet, dass** das Mitnehmerelement (21) durch eine mit Spiel versehene formschlüssige Verbindung drehfest mit dem weiteren Mitnehmerelement (31) verbindbar ist.

9. Triebrad nach Anspruch 7 oder 8, **dadurch gekennzeichnet, dass** das Mitnehmerelement (21) eine Mitnehmerverzahnung aufweist, in die eine weitere Mitnehmerverzahnung des weiteren Mitnehmerelements (31) eingreift.

10. Triebrad nach einem der Ansprüche 7 bis 9, **dadurch gekennzeichnet, dass** das weitere Mitnehmerelement (31) radial außen einen Mitnehmerverzahnungsbereich (41) aufweist.

11. Triebrad nach Anspruch 10, **dadurch gekennzeichnet, dass** das Mitnehmerelement (21) radial außen einen sich in axialer Richtung erstreckenden Mitnehmerverzahnungsbereich (40) aufweist, in den der Mitnehmerverzahnungsbereich (41) des weiteren Mitnehmerelements (31) und/oder der Tellerfederverzahnungsbereich (42) der Tellerfeder (44) eingreifen/eingreift.

12. Triebrad nach einem der Ansprüche 7 bis 11, **dadurch gekennzeichnet, dass** die Mitnehmerelemente (21,31), vorzugsweise unter Zwischenschaltung von Käfigelementen (22,28), durch das Drehschwingungsdämpfungselement (25) beziehungsweise die Drehschwingungsdämpfungselemente miteinander gekoppelt sind.

13. Triebrad nach einem der vorhergehenden Ansprüche, **dadurch gekennzeichnet, dass** das Triebrad ein zusätzliches Mitnehmerelement (8) umfasst, an dem ein Antriebswellenschwingungsdämpfer (9,10) angebracht ist.
